# EUROPEAN PATENT SPECIFICATION

(11) **EP 2 834 137 B1**
(45) Date of publication and mention of the grant of the patent: **17.08.2016**
(21) Application number: 12715453.2
(22) Date of filing: 05.04.2012
(51) Int. Cl.: B62D 35/00

(54) **AIR DEFLECTOR ASSEMBLY**
LUFTABLENKUNGSANORDNUNG
ENSEMBLE DÉFLECTEUR D'AIR

(43) Date of publication of application: 11.02.2015
(73) Proprietor: Daf Trucks N.V., 5643 TW Eindhoven (NL)
(72) Inventor: THIJSSEN, Wilhelmus Cornelis, NL-5643 TW Eindhoven (NL); BOESTEN, Hubert Clemens Maria Constant, NL-5643 TW Eindhoven (NL)
(74) Representative: V.O.
(86) International application number: PCT/NL2012/050231
(87) International publication number: WO 2013/151418

(56) References cited:
- US-A- 4 102 548
- US-A- 4 470 628
- US-A- 4 607 874
- US-A1- 2008 093 886

## Description

The invention relates to an air deflector assembly for mounting on a roof of a motor vehicle. More in particular the invention relates to an adjustable air deflector for mounting on top of the driver cab of a tractor for an articulated truck including the tractor and a trailer.

A common problem with trucks and trailers is that the height of the payload may vary substantially and often exceeds the height of the cab structure. When the payload is higher than the cab this usually accounts for aerodynamic losses. To reduce such losses it has become customary to provide cab structures with an air deflector on a roof portion of the cab. Preferably these air deflectors also comprise an adjustable air deflecting panel to accommodate for variations in payload. Such an arrangement is known from United States patent document US 4,375,898. The known arrangement has been reasonably successful, but has also added to the weight, the complexity, and the costs of vehicles that were so equipped. One reason causing this has been that the adjustable deflector panel, which is moved by a central actuator, needed substantial reinforcements to resist operating forces and wind loads. Another reason that has hampered efficiency in use is the mechanisms proposed for adjusting the air deflector panel. In its most simple form the adjusting mechanism has included a manually adjustable strut having a lower member that telescopically receives an upper member. A plurality of registering openings in the upper and lower members and a removable and reinsertable locking pin allow adjustments to be made. Making adjustments to this mechanism requires the truck driver to climb to the roof of the driver cab, to manually support the relatively heavy deflector panel, while taking out the locking pin, and re-inserting the locking pin in a different pair of aligned openings after raising or lowering the deflector panel with the other hand. It will be clear that this is a somewhat awkward operation that is not likely to be popular with truck drivers. In addition there is also a safety risk involved. In practise this has often resulted in trucks and tractors hauling payloads with inappropriately adjusted deflector panels and this has unnecessary raised fuel cost and reduced speed. Another option proposed by the same document US 4,375,898 is the use of remote control by means of an electric or pneumatic actuator. While using these forms of remote control has greatly improved the frequency and accuracy of adjusting the air deflector to given payloads, it has also added substantially to the weight and cost. Hence there is still felt a need for positioning mechanisms that are low in weight, cost efficient, as well as easy and safe to operate by the truck driver.

An air deflector according the preamble of claim 1 is known from US4607874A.

Accordingly it is an object of the present invention to propose an improved adjustable air deflector assembly according claim 1 for mounting on a roof of a motor vehicle having a driver cab. In particular it is an object of the present invention to reduce the effort in adjusting an air deflector panel using a construction that is light weight, reliable and efficient. In a more general sense it is thus an object of the invention to overcome or ameliorate at least one of the disadvantages of the prior art. It is also an object of the present invention to provide alternative structures which are less cumbersome in assembly and operation and which moreover can be made relatively inexpensively. Alternatively it is an object of the invention to at least provide a useful choice in proposing an alternative solution.

To this end the invention proposes an air deflector assembly as defined in one or more of the appended claims. According to one aspect of the invention the deflector assembly includes a support frame mountable to a roof of the driver cab; a deflector panel adjustably supported by the support frame; and a positioning mechanism permitting the deflector panel to be moved between a retracted position and a selected one of several deflecting positions, wherein a forward edge of the deflector panel is pivotally mounted to the support frame; wherein the positioning mechanism comprises a lever having a first lever end and a second lever end, the first lever end being pivotally arranged on the support frame; a link having a first link end and a second link end, the first link end being pivotally linked to the deflector panel; a hinge member pivotally connecting the lever and the link to one another; and a linear actuator having first and second pivotal connecting ends being arranged for altering an angle defined between the lever, the link, and the hinge member, and wherein one of the hinge member and a pivotal attachment of the second pivotal connecting end of the linear actuator is associated with a location on one of the lever and the link intermediate of the respective first and second lever end or the first and second link end. This arrangement allows the weight and forces exerted by the actuator to be fully supported by the hinged lever and link and thereby from the roof of the driver cab. As a result the deflector panel will only be subjected to the forces necessary to support its rear edge. Optionally the air deflector assembly may have the hinge member associated with a location on one of the lever and the link intermediate of the respective first and second lever ends or the respective first and second link ends, and the pivotal attachment of the second pivotal connecting end of the linear actuator may then be at one of the second lever end and the second link end. As a further option the air deflector assembly may have its hinge member associated with a location on the lever intermediate of the first lever end and the second lever end, and may then have the pivotal attachment of the second pivotal connecting end of the linear actuator at the second lever end. This optional arrangement will position an appropriate end of the linear actuator within reach of a drive shaft that can conveniently depent along a substantially vertical rear wall of a driver cab.

According to a further optional feature the first pivotal connecting end of the linear actuator is operatively associated with the first link end, so that a common hinge pin may be employed for a pivotal connection to the deflector panel.

It may further be of advantage, when the linear actuator includes an elongate screw threaded shaft, having a male screw thread along at least a portion of its length, and a translating member, having an internal female screw thread in engagement with the threaded shaft. Such an arrangement results in a very convenient and cost effective mechanism for converting a rotating movement into a translating movement, whereby the pitch of the screw thread can be selected to be self-braking. Using a self-braking screw thread pitch will both reduce the effort in operating the linear actuator to adjust the deflector panel, and ensure that the adjusted position is retained without requiring any further means. The air deflector assembly may then also have its screw threaded shaft with one end retained axially immobile in an anchor member that comprises one of the first and second pivotal connecting ends, while the translating member comprises the other of the first and second pivotal connecting ends. At the same time the screw threaded shaft may also be rotatably journalled in the anchor member with the translating member rotatably immobile with respect to the screw threaded shaft. In combination therewith the anchor member can optionally comprise the second pivotal connecting end, and a portion of the one end of the screw threaded shaft that is retained in the anchor member can protrude from an opposite side of the anchor member and be drivingly engaged by a universal joint. In such an arrangement an opposite end of the universal joint can be drivingly engaged by an upper end of a drive shaft for mounting to a rear wall of a driver cab, and a lower portion of the drive shaft can provided with actuating means. This allows for operation by a truck driver from a convenient and safe location and will likely invite the truck driver to adjust the deflector or roof spoiler as often as necessary. When manual actuation is chosen, expensive electrical, pneumatic, or hydraulic devices can be avoided and weight will be saved. Also it is then not necessary to clutter the interior of the driver cab with additional operating devices, which would take up valuable space and also add to the overall cost and complexity. Clearly it is convenient in this regard for manual actuation when the actuating means includes a hand crank for manual actuation at a location remote from the linear actuator. In combination with these optional features it is further advantageous when the lower portion of the drive shaft is calibrated for indicating predefined positions of adjustment of the deflector panel. It has been a long felt need to have at a remote actuation position of a roof deflector an accurate indication of the adjustment that is accomplished. Before the present invention it has only been possible to obtain such indications through a laborious process of trial and error, or by providing the expensive complications of electronic surveyance installations.

With the linear actuator including an elongate screw threaded shaft, and an engaging translating member, it may optionally be of further advantage when the translating member includes an elongate substantially cylindrical housing for telescopically receiving the threaded shaft. This will generally protect the screw threaded portions against the ingress of foreign matter that may cause friction and wear.

As a further option the lever may advantageously be part of a pair of parallel first and second levers commonly mounted on a transverse shaft and the link may then be part of a pair of parallel first and second links. This arrangement will enable the deflector panel to be lifted by opposite corners of its rear edge, which will allow deflector panels with only a minimum of inherent integrity to be reliably supported and adjusted by links acting simultaneously on opposite corners. By the same option it becomes possible for only the first lever of a pair and the first link of a pair to be associated with the linear actuator. This will greatly enhance simplicity, cost effectiveness, as well as saving weight.

It may be generally advantageous in manufacture and maintenance, when the support frame has fixation means adapted to cooperate with counter provisions on an existing roof of a driver cab for its mounting thereon.

Further advantageous aspects of the invention will become clear from the appended description and in reference to the accompanying drawings, in which:
Figure 1 is a driver cab for a truck or tractor provided with the air deflector of the invention;
Figure 2 is a perspective exploded view of a roof and rear wall portion of the driver cab of Figure 1 with the air deflector as viewed in an opposite direction;
Figure 3 is a perspective exploded view of the air deflector of Figure 1;
Figure 4 is a perspective exploded view of a support frame and positioning mechanism of the air deflector of Figures 2 and 3;
Figure 5 is a partial elevation of the actuating part of the positioning mechanism;
Figure 6 is a cross section of the positioning mechanism of Figure 5 taken across the line VI-VI;
Figure 7 is an exploded view of the positioning mechanism and associated actuating shaft;
Figure 8 is a perspective view of an upper mounting bracket for the actuating shaft;
Figure 9 is a perspective view of a lower mounting bracket for the actuating shaft; and
Figure 10 is a clamp part for use with the brackets of Figures 8 and 9.

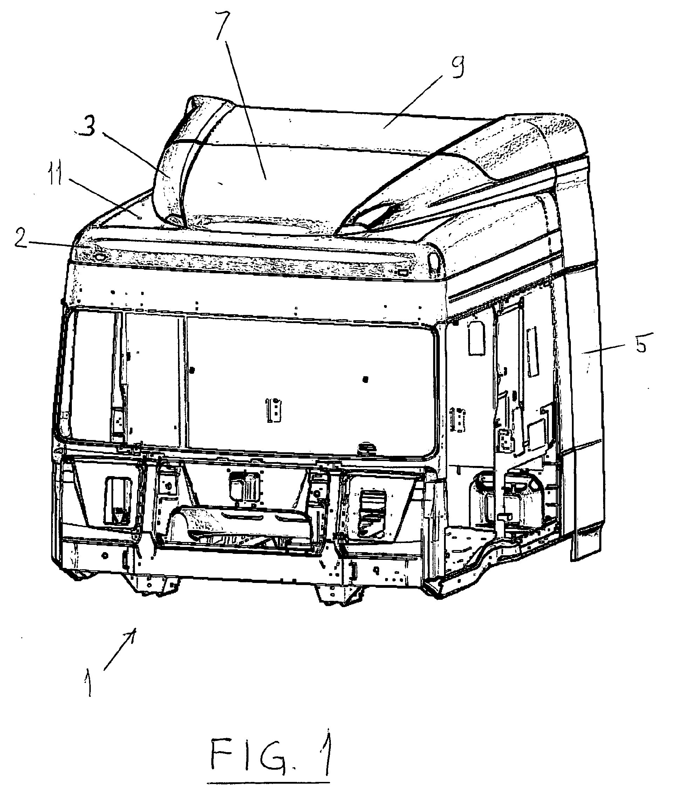

In Figure 1 a cab structure 1 is shown that is useful for trucks and tractors, and in particular for tractors hauling trailers. The cab structure 1 is provided with an air deflector 3 on a roof portion 2 of the cab 1 and also with fenders 5 to account for payloads that are wider than the cab structure. The air deflector 3 has a fixed portion 7 ad an adjustable deflector panel 9. The fenders 5 may be at a fixed angle or be adjustable as the case may be.

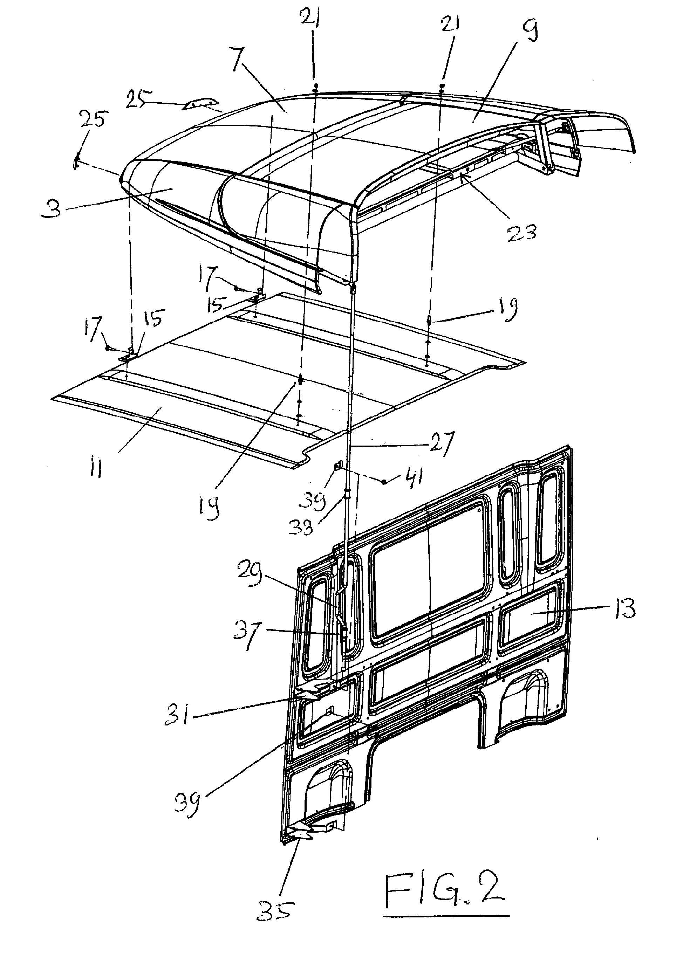

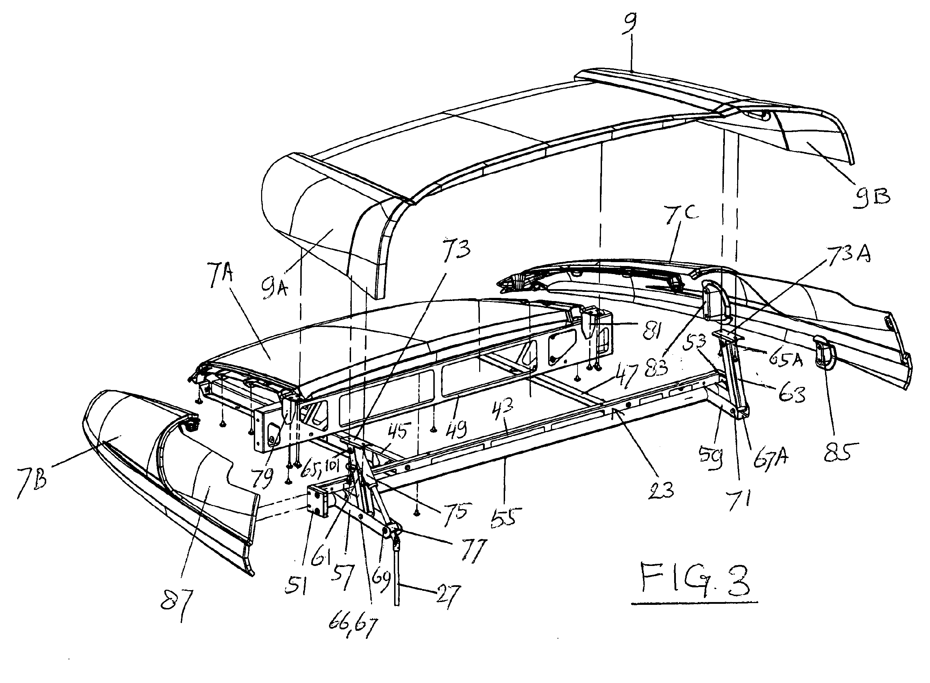

In Figure 2 a roof panel 11 and a rear wall panel 13 of the cab structure 1 of Figure 1 are shown in an exploded arrangement. Also shown in Figure 2 is the air deflector or roof spoiler 3, which in use is mounted to the roof panel 11 by means of fasteners. Such fasteners can be generally conventional and include brackets 15 and screws 17 at the front and screw studs 19 with nuts 21 at the rear. These fasteners are engaging a support frame 23 that will be described in more detail in reference to Figure 3. The screws 17 at the front may be concealed from the exterior by cover plates 25. Also visible in Figure 2 is a drive shaft 27 for adjusting the angular position of the deflector panel 9 with respect to the fixed portion 7 of the air deflector 3. The drive shaft 27 has a hand crank portion 29 for manual actuation. The drive shaft 27 in use is mounted for rotation to the rear wall 13 by means of an upper mounting bracket 31 and an upper bearing bush 33, and by means of a lower mounting bracket 35 and a lower bearing bush 37. The upper and lower bearing bushes 33, 37 are held to their respective upper and lower brackets 31, 35 by a clamp part 39 and a fastener 41.

Reverting now to Figure 3 it will be seen that the support frame 23 includes a rear transverse member 43 and forwardly extending first and second longerons 45, 47. An intermediate transverse member 49 is mounted on top of the first and second longerons 45, 47. The fixed portion 7 of the air deflector is composed of a central panel 7A, opposite first and second side panels 7B, 7C. The central panel 7A has a front edge attached to forward ends of the first and second longerons 45, 47 and a rear edge to the intermediate transverse member 49. The rear transverse member 43 has first and second end flanges 51, 53 between which a transverse shaft 55 is rotatably mounted. First and second levers 57, 59 are mounted thereon for rotation with the transverse shaft 55. A first link 61 of a pair of links 61, 63 has a first link end 65 to be pivotally linked to the deflector panel 9 and a second link end 66 connected to the first lever 57 by a hinge member 67. The second link 63 of the pair of links has a similar first link end 65A to be pivotally connected to the deflector panel 9 and a similar hinge member 67A for pivotally connecting the second link 63 to the second lever 59. The first lever 57 of the pair of levers 57, 59 has an extension beyond the hinge member 67 defining a second end 69 and a length different from the second lever 59 which has a second end 71 associated with the hinge member 67A. Operatively connected between a first hinge bracket 73, for pivotally connecting the first link end 65 of link 63 to the deflector panel 9, and the second end 69 of the arm 57 is a linear actuator 75. A first pivotal connecting end 101 of the linear actuator 75 coincides with the pivotal connection of the first link end 65 and a second pivotal connecting end of the linear actuator 75 is pivotally associated with the second end 69 of the first lever 57 by means of an anchor member 77.

A forward edge of the deflector panel 9 is pivotally mounted to the intermediate transverse member 49 by means of first and second hinges 79, 81. The first and second side panels 7B, 7C are each attached to a respective opposite end of the intermediate transverse member 49 and a respective one of the first and second end flanges 51, 53 of the rear transverse member 43. To this end, suitable mountings 83, 85 are provided on the inside of the first and second side panels 7B, 7C. The side panels 7B, 7C are further each provided with a recessed portion 87. Downwardly turned edges 9A, 9B of the deflector panel 9 overlap with the recessed portions 87 so that air gaps are prevented when the deflector panel 9 has its rearward edge elevated from a retracted position to a selected angular position of adjustment with respect to the fixed portion 7, 7A, 7B, 7C.

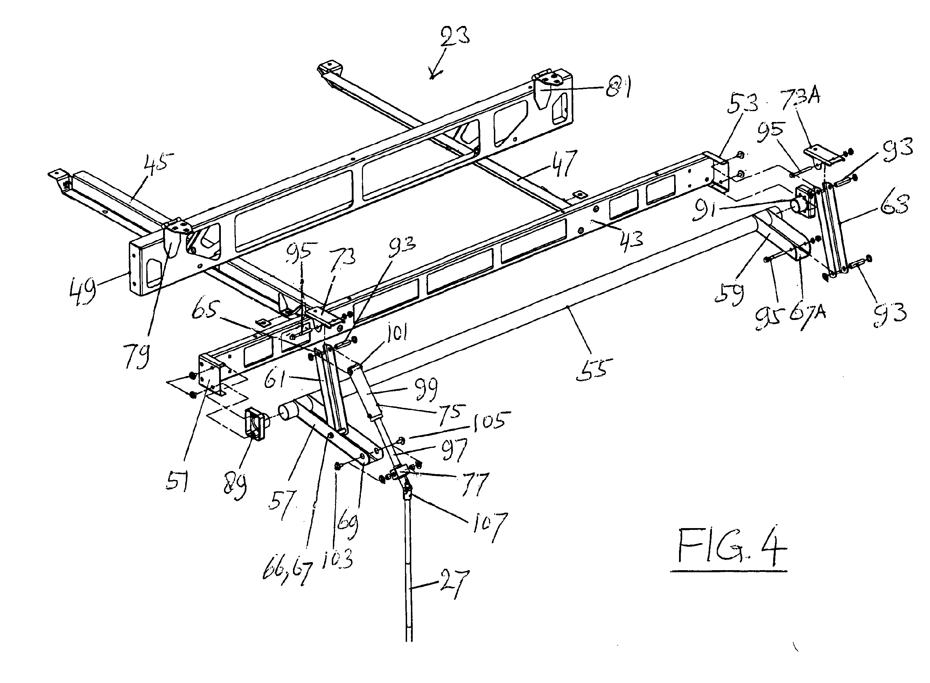

The support frame 23 and positioning mechanism are shown in more detail in Figure 4. The support frame 23 as can be clearly seen is composed of the first and second longerons 45, 47 attaching the rear transverse member 43 and the intermediate transverse member 49. The intermediate transverse member 49 carries the first and second hinges 79, 81. The transverse shaft 55 is carried between the first flange 51 and the second flange 53 by a first bearing block 89 and a second bearing block 91, which are each mounted to the flanges 51 or 53 in a conventional manner using fasteners. The first lever 57 is mounted for rotation with the transverse shaft 55. Any angular movement of the first lever 57 is followed by the second lever 59 in the same amount because also the second lever 59 is mounted for rotation with the transverse shaft 55. The first link 61 is hinged to the first lever 57 at a location on the first lever 57 intermediate its first end with which it is attached to the shaft 55 and its second end 69. This can be by means of a hinge pin 93 and fastener 95, as shown in an exploded arrangement with respect to the second lever 59 and second link 63. The linear actuator 75 has a screw threaded shaft 97 having a male screw thread on a portion of its outer surface. A translating member 99 has an internal female screw thread (not visible, but conventional) in engagement with the male screw thread of the threaded shaft 97. The linear actuator 75 has a pivotal connecting end 101, which together with the first link end 65 is pivotally connected to the hinge bracket 73 by means of a further hinge pin 93 and fastener 95. The linear actuator 75 at an opposite end has a second pivotal connection which is formed by the anchor member 77. The anchor member 77 is pivotally connected to the second end 69 of the first lever 57 by suitable fasteners 103, 105. The threaded shaft, or screw spindle 97 with one end is axially immobile with respect to the anchor member 77, but also rotatably journalled with respect thereto. Thus rotation of the threaded shaft 97 causes the first pivotal connection 101 to move toward and away from the anchor member 77 depending on the direction of rotation. Rotating the threaded shaft 97 of the linear actuator 75 is accomplished by drive shaft 27, driving through a universal joint 107. Shortening the linear actuator 75 by rotation of the threaded shaft 97 will move the second end 69 of the first arm 57 upwardly and at the same time also move the first hinge bracket 73 upwardly. Increasing the length of the linear actuator 75 by rotation in an opposite direction will have the effect that the first hinge bracket 73 is lowered. The same will happen at an opposite end of the transverse shaft 55 by the second arm 59 and the second link 63, raising or lowering a second hinge bracket 73A. Both the first and second mounting brackets 73, 73A will thereby raise or lower the rear edge of the deflector panel 9 (shown in Figures 1-3). During adjusting movement of the linear actuator 75 it will be clear that the drive shaft 27, with its portion connected to the universal joint 107, will move through an arc about the transverse shaft 55 and thereby also vertically upwardly and downwardly.

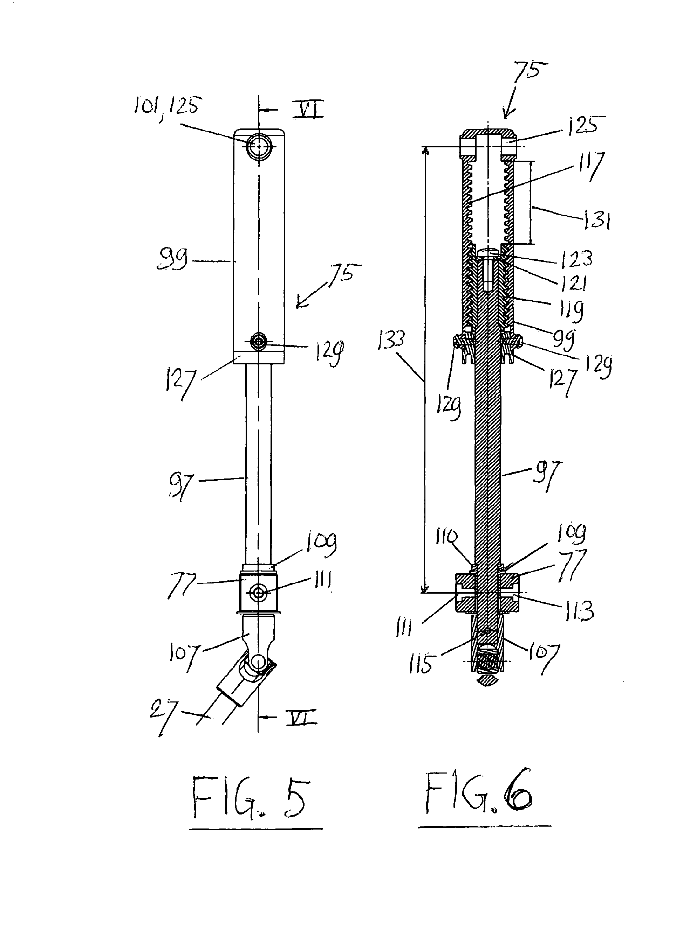

Figures 5 and 6 show the linear actuator 75 in greater detail. The threaded shaft 97, as explained in reference to previous drawing Figures, can be rotated by drive shaft 27 though universal joint 107. The threaded shaft 97 at its lower end has a stepped portion with a reduced diameter around which a collared bearing sleeve 109 is mounted. An additional abutment ring 110 may be additionally provided for additional axial support of the bearing sleeve 109. The bearing sleeve 109 also passes through a central bore in the anchor member 77. The anchor member has laterally opposed recesses 111, 113 for accepting the fasteners 103, 105 (as shown in Figure 4). The threaded shaft 97 is held axially immobile in the anchor member 77 by the universal joint 107 having a slightly larger diameter than the central bore and the bearing sleeve 109 in the anchor member 77. The universal joint 107 is fixed to the threaded shaft 97 by a cross pin 115. The bearing sleeve 109 at the same time ensures that the threaded shaft is rotatable with respect to the anchor member 77. The translating member 99 is conveniently formed as a hollow substantially cylindrical element with a female screw thread 117 on its inner circumferential surface. While a male screw thread can conveniently also be formed integrally on an upper portion of the threaded shaft 97, in the embodiment described here, by way of example, the upper end of the threaded shaft 97 has an optional non-round section about which a screw threaded sleeve 119 is non-rotatably engaged. Thereby a male screw thread on the outer circumference of the threaded sleeve 119 will rotate together with the threaded shaft 97. Having the male screw thread on a separate part, such as the sleeve 119, can be advantageous in manufacture and also enables the material to be selected differently from the shaft 97 and more purposeful for its functioning. The screw threaded sleeve 119 is held onto the threaded shaft 97 by means of a washer 121 and a screw 123. An upper end of the translating member 99 is provided with a through bore 125 to form the first pivotal connection 101. A lower end of the translating member 99 has an end plug 127 inserted herein, to prevent the screw threaded shaft 97 to become disengaged from the translating member 99. The end plug 127 may be held in position by fasteners 129 inserted through a perimeter wall of the hollow cylindrical translating member 99. Rotating the threaded shaft 97 by the drive shaft 27 via the universal joint 107, from the end position shown in Figure 6, will allow the threaded sleeve 119 to move over a distance 131. This will reduce the distance 133 between the through bore 125 representing the first pivotal connection 101 of the translating member 99 and the recesses 111, 113 of the anchoring member 77.

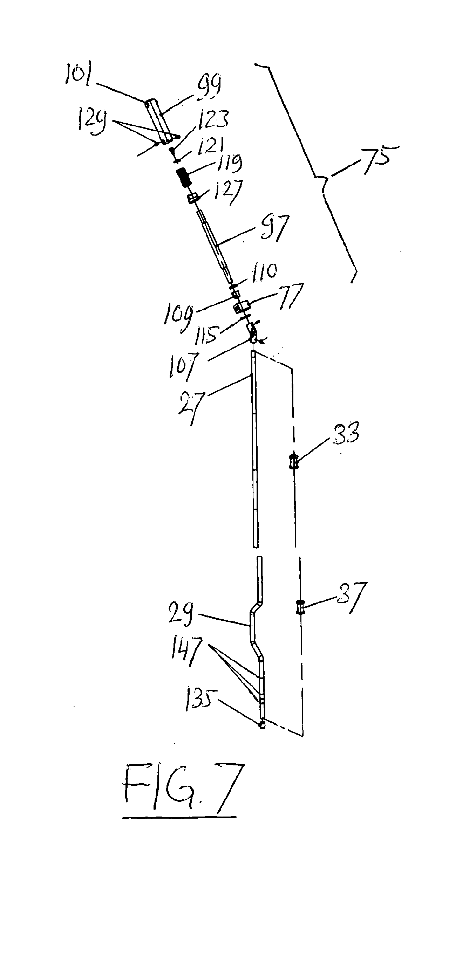

In Figure 7 the drive shaft 27 and its associated linear actuator 75 are shown in further detail. The drive shaft 27 receives the upper bearing bush 33 on a section of the drive shaft 27 upwardly of the hand crank portion 29. The lower bearing bush 37 is received on a section of the drive shaft 27 below its hand crank portion 29. The lower end of the drive shaft 27 can be closed off by an optional end plug 135. The linear actuator 75 has the translating member 99 formed as a substantially hollow cylindrical housing, as explained in reference to Figures 5 and 6. The arrangement of all the parts making up the linear actuator 75 is shown in an exploded arrangement in Figure 7 and for a description of the identically numbered parts reference can be made to Figures 5 and 6.

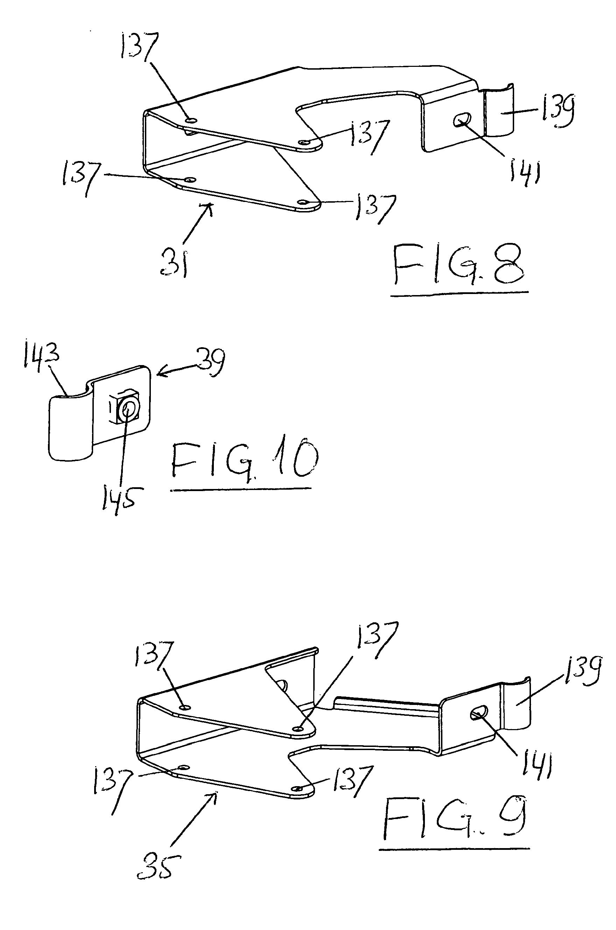

As shown in greater detail in Figures 8, 9 and 10 the upper mounting bracket 31, and lower mounting bracket 35 for mounting of the drive shaft 27 to a rear wall 13 of a drive cab 1 (as shown in Figure 2), are slightly different. This difference between the upper bracket 31 and the lower bracket 35 ensures that the drive shaft 27 is slightly slanted with respect to the rear wall 13, whereby its distance from the rear wall 13 at the top is slightly less than at the bottom. It has been found that this slightly slanted angle is a good compromise with respect to a given driver cab and the floating position of the universal joint 107 in the upper region of the driver cab 1. It will be clear to the skilled person that a driver cab and the deflector assembly can be modified so that the drive shaft 27 can become parallel to the rear wall 13 of the cab 1. In that conceivable situation the upper and lower mounting brackets 31, 35 can be chosen to be identical. The upper and lower mounting brackets 31, 35 as shown in Figures 8 and 9 conveniently also serve in mount of the fenders 5 (shown in Figure 1, and conventional). Mounting holes 137 may be provided in a lateral outer portion of each of the brackets 31 and 35 for mounting such fenders. The portion of the first and second mounting brackets 31, 35 for receiving the drive shaft 27 are provided with a substantially semi-circular shell portion 139 and an opening 141 for receiving a conventional fastener. The clamp part 39 shown in Figure 10, and already referred to in reference to Figure 2, has a complementary semi-circular shell portion 143 and an integrally connected nut part 145 for receiving a conventional screw fastener, so that it can be attached to either one of the upper and lower mounting brackets 31, 35 by means of the opening 141 therein. In use, the upper and lower bearing bushes 33, 37 (see Figure 7) will be mounted between the opposite semi-circular shell portions 139, 143.

As the upper end of the drive shaft 27 during adjustment of the deflector panel 9 will move together with the universal joint 107 through an arc about transverse shaft 55, the drive shaft 27, as explained, will also move in a vertical direction. This vertical movement is allowed in that the drive shaft 27 can slide with respect to the upper and lower bearing bushes 33, 37. It is therefore advantageous when at a lower portion of the drive shaft 27 calibrations 147 (see Figure 7) are provided to indicate predefined positions of adjustment of the deflector panel 9. In this way the truck driver while adjusting the deflector panel 9 by turning the crank portion 29 can have a precise indication of what he is achieving.

It is clear that the movement of the upper part of the drive shaft 27 also results in some movement of that upper part to and from the rear wall 13 of the cab 1. This movement is accounted for by the distance from the universal joint 107 to the upper mounting bracket 31 and the flexibility of the drive shaft 27. This arrangement eliminates the need for a second universal joint and thus saves costs.

Accordingly an air deflector assembly 3 has been described that is suitable for mounting on a roof 2 of a motor vehicle having a driver cab 1 with a substantially vertical rear wall 13. The air deflector assembly 3 includes a support frame 23 for mounting to the roof 2 of the driver cab 1. The assembly 3 further includes a deflector panel 9 adjustably supported by the support frame 23, and a positioning mechanism permitting the deflector panel 9 to be moved between a retracted position and a selected one of several deflecting positions. A forward edge of the deflector panel 9 is pivotally mounted to the support frame 23. The positioning mechanism comprises a lever 57 with a first lever end and a second lever end 69. The first lever end being pivotally arranged on the support frame by a transverse shaft 55. A link 61 having a first link end 65 and a second link end 66, has its first link end 65 pivotally linked to the deflector panel 9 by means of a hinge bracket 73. A hinge member 67 pivotally connects the lever 57 and the link 61 to one another. A linear actuator 75 has first and second pivotal connecting ends 101, 77 and is arranged for altering an angle defined between the lever 57, the link 61, and the hinge member 67. One of the hinge member 67 and a pivotal attachment of the second pivotal connecting end 77 of the linear actuator 75 is associated with a location on one of the lever 57 and the link 61 intermediate of the respective first and second lever end 69 or the first and second link end 65, 66. In the example of the air deflector assembly 3 described herein above, the hinge member 67 is associated with a location on the lever 57 intermediate of the first lever end and the second lever end 69, and the pivotal attachment of the second pivotal connecting end 77 of the linear actuator 75 is at the second lever end 69.

It is thus believed that the operation and construction of the present invention will be apparent from the foregoing description and drawings appended thereto. It will be clear to the skilled person that the invention is not limited to any embodiment herein described and that modifications are possible which should be considered within the scope of the appended claims.

## Claims

1. Air deflector assembly (3) for mounting on a roof of a motor vehicle (2) having a driver cab with a substantially vertical rear wall, the assembly including:
a support frame (23) mountable to a roof of the driver cab;
a deflector panel (9) adjustably supported by the support frame (23); and
a positioning mechanism permitting the deflector panel (9) to be moved between a retracted position and a selected one of several deflecting positions,
wherein a forward edge of the deflector panel (9) is pivotally mounted to the support frame (23);
wherein the positioning mechanism comprises:
a lever (57) having a first lever end and a second lever end (69), the first lever end being pivotally arranged on the support frame (23);
a link (61) having a first link end (65) and a second link end (66), the first link end being pivotally linked to the deflector panel;
a hinge member (67) pivotally connecting the lever (57) and the link to one another; and
a linear actuator (75) having first and second pivotal connecting ends (77, 101) being arranged for altering an angle defined between the lever (57), the link, and the hinge member (67), and
**characterized in that** one of the hinge member (67) and a pivotal attachment of the second pivotal connecting end (77) of the linear actuator (75) is associated with a location on one of the lever (57) and the link (61) intermediate of the respective first and second lever end (69) or the first and second link end (65, 66).

2. Air deflector assembly according to claim 1, wherein the hinge member is associated with a location on one of the lever and the link intermediate of the respective first and second lever ends or the respective first and second link ends, and wherein the pivotal attachment of the second pivotal connecting end of the linear actuator is at one of the second lever end and the second link end.

3. Air deflector assembly according to claim 1 or 2, wherein the hinge member is associated with a location on the lever intermediate of the first lever end and the second lever end, and wherein the pivotal attachment of the second pivotal connecting end of the linear actuator is at the second lever end.

4. Air deflector assembly according to claim 1, 2, or 3, wherein the first pivotal connecting end of the linear actuator is operatively associated with the first link end.

5. Air deflector assembly according to one of claims 1 to 4, wherein the linear actuator includes an elongate screw threaded shaft, having a male screw thread along at least a portion of its length, and a translating member, having an internal female screw thread in engagement with the threaded shaft.

6. Air deflector assembly according to claim 5, wherein the screw threaded shaft has one end retained axially immobile in an anchor member that comprises one of the first and second pivotal connecting ends, while the translating member comprises the other of the first and second pivotal connecting ends.

7. Air deflector assembly according to claim 6, wherein the screw threaded shaft is rotatably journalled in the anchor member and the translating member is rotatably immobile with respect to the screw threaded shaft.

8. Air deflector assembly according to claim 6 or 7, wherein the anchor member comprises the second pivotal connecting end, and wherein a portion of the one end of the screw threaded shaft retained in the anchor member protrudes from an opposite side of the anchor member and is drivingly engaged by a universal joint.

9. Air deflector assembly according to claim 8, wherein an opposite end of the universal joint is drivingly engaged by an upper end of a drive shaft for mounting to a rear wall of a driver cab, and wherein a lower portion of the drive shaft is provided with actuating means.

10. Air deflector assembly according to claim 9, wherein the actuating means include a hand crank for manual actuation remote from the linear actuator.

11. Air deflector assembly according to claim 9 or 10, wherein the lower portion of the drive shaft is calibrated for indicating predefined positions of adjustment of the deflector panel.

12. Air deflector assembly according to one of claims 5 to 11, wherein the translating member includes an elongate substantially cylindrical housing for telescopically receiving the threaded shaft.

13. Air deflector assembly according to one of claims 1 to 12, wherein the lever is part of a pair of parallel first and second levers commonly mounted on a transverse shaft and wherein the link is part of a pair of parallel first and second links.

14. Air deflector assembly according to claim 13, wherein only the first lever of a pair and the first link of a pair are associated with the linear actuator.

15. Air deflector assembly according to one of claims 1 to 14, wherein the support frame has fixation means adapted to cooperate with counter provisions on an existing roof of a driver cab for its mounting thereon.

## Patentansprüche

1. Luftablenkungsanordnung (3) zum Montieren auf einem Dach eines Motorfahrzeugs (2) mit einem Fahrerhaus mit einer im Wesentlichen vertikalen Rückwand, die Anordnung umfassend:
ein Trägergestell (23), montierbar auf einem Dach des Fahrerhauses;
eine Ablenkplatte (9), verstellbar getragen von dem Trägergestell (23); und
einen Positionierungsmechanismus, der es ermöglicht, die Ablenkplatte (9) zwischen einer zurückgezogenen Position und einer ausgewählten von mehreren Ablenkungspositionen zu bewegen,
wobei eine Vorderkante der Ablenkplatte (9) schwenkbar an dem Trägergestell (23) montiert ist;
wobei der Positionierungsmechanismus Folgendes umfasst:
einen Hebel (57) mit einem ersten Hebelende und einem zweiten Hebelende (69), wobei das erste Hebelende schwenkbar auf dem Trägergestell (23) angeordnet ist;
ein Verbindungselement (61) mit einem ersten Verbindungselementende (65) und einem zweiten Verbindungselementende (66), wobei das erste Verbindungselementende schwenkbar mit der Ablenkplatte verbunden ist;
ein Gelenkelement (67), das den Hebel (57) und das Verbindungselement schwenkbar miteinander verbindet; und
ein lineares Betätigungselement (75) mit ersten und zweiten Schwenkverbindungsenden (77, 101), angeordnet um einen zwischen dem Hebel (57), dem Verbindungselement und dem Gelenkelement (67) definierten Winkel zu verändern, und **dadurch gekennzeichnet, dass** eines von dem Gelenkelement (67) und einer Schwenkbefestigung des zweiten Schwenkverbindungsendes (77) des linearen Betätigungselements (75) mit einer Stelle an einem von dem Hebel (57) und dem Verbindungselement (61) zwischen dem entsprechenden ersten und zweiten Hebelende (69) oder dem ersten und zweiten Verbindungselementende (65, 66) verbunden ist.

2. Luftablenkungsanordnung nach Anspruch 1, wobei das Gelenkelement mit einer Stelle an einem von dem Hebel und dem Verbindungselement zwischen den entsprechenden ersten und zweiten Hebelenden oder den entsprechenden ersten und zweiten Verbindungselementenden verbunden ist, und wobei die Schwenkbefestigung des zweiten Schwenkverbindungsende des linearen Betätigungselements an einem von dem zweiten Hebelende und dem zweiten Verbindungselementende ist.

3. Luftablenkungsanordnung nach Anspruch 1 oder 2, wobei das Gelenkelement mit einer Stelle an dem Hebel zwischen dem ersten Hebelende und dem zweiten Hebelende verbunden ist, und wobei die Schwenkbefestigung des zweiten Schwenkverbindungsendes des linearen Betätigungselements an dem zweiten Hebelende ist.

4. Luftablenkungsanordnung nach Anspruch 1, 2 oder 3, wobei das erste Schwenkverbindungsende des linearen Betätigungselements operativ mit dem ersten Verbindungselementende verbunden ist.

5. Luftablenkungsanordnung nach einem der Ansprüche 1 bis 4, wobei das lineare Betätigungselement einen länglichen Schraubengewindeschaft mit einem Außengewinde entlang mindestens eines Teils seiner Länge und einem übersetzenden Element mit einem Innengewinde, im Eingriff mit dem Gewindeschaft, umfasst.

6. Luftablenkungsanordnung nach Anspruch 5, wobei der Schraubengewindeschaft ein Ende hat, das axial unbeweglich in einem Ankerelement, umfassend eines der ersten und zweiten Schwenkverbindungsenden, gehalten wird, während das übersetzende Element die anderen der ersten und zweiten Schwenkverbindungsenden umfasst.

7. Luftablenkungsanordnung nach Anspruch 6, wobei der Schraubengewindeschaft drehbar in dem Ankerelement eingesetzt ist und das übersetzende Element drehbar unbeweglich in Bezug auf den Schraubengewindeschaft ist.

8. Luftablenkungsanordnung nach Anspruch 6 oder 7, wobei das Ankerelement das zweite Schwenkverbindungsende umfasst und wobei ein Abschnitt des einen Endes des Schraubgewindeschafts, gehalten in dem Ankerelement, von einer entgegengesetzten Seite des Ankerelements hervorsteht und antreibend in Eingriff mit einem Antriebsgelenk ist.

9. Luftablenkungsanordnung nach Anspruch 8, wobei ein entgegengesetztes Ende des Antriebsgelenks antreibend im Eingriff mit einem oberen Ende einer Antriebswelle zum Montieren an einer Rückwand des Fahrerhauses ist und wobei ein unterer Abschnitt der Antriebswelle mit Betätigungsmitteln versehen ist.

10. Luftablenkungsanordnung nach Anspruch 9, wobei die Betätigungsmittel eine Handkurbel zur manuellen Betätigung entfernt von dem linearen Betätigungselement umfasst.

11. Luftablenkungsanordnung nach Anspruch 9 oder 10, wobei der untere Teil der Antriebswelle kalibriert ist, um vordefinierte Einstellpositionen der Ablenkplatte anzugeben.

12. Luftablenkungsanordnung nach einem der Ansprüche 5 bis 11, wobei das übersetzende Element ein längliches, im Wesentlichen zylindrisches Gehäuse umfasst, um darin den Gewindeschaft teleskopisch aufzunehmen.

13. Luftablenkungsanordnung nach einem der Ansprüche 1 bis 12, wobei der Hebel Teil eines Paares paralleler erster und zweiter Hebel ist, die gemeinsam auf einem Querschaft montiert sind, und wobei das Verbindungselement Teil eines Paares paralleler erster und zweiter Verbindungselemente ist.

14. Luftablenkungsanordnung nach Anspruch 13, wobei nur der erste Hebel eines Paares und das erste Verbindungselement eines Paares mit dem linearen Betätigungselement verbunden sind.

15. Luftablenkungsanordnung nach einem der Ansprüche 1 bis 14, wobei das Trägergestell Befestigungsmittel hat, die geeignet sind, um mit Gegenvorrichtungen auf einem existierenden Dach eines Fahrerhauses zusammenzuarbeiten, um das Trägergestell darauf zu befestigen.

## Revendications

1. Ensemble de déflecteur d'air (3) destiné à être monté sur un toit d'un véhicule à moteur (2) ayant une cabine de conducteur avec une paroi arrière sensiblement verticale, l'ensemble comprenant :
un bâti de support (23) pouvant être monté sur un toit de la cabine de conducteur ;
un panneau de déflecteur (9) supporté de manière réglable par le bâti de support (23) ; et
un mécanisme de positionnement permettant au panneau de déflecteur (9) d'être déplacé entre une position rétractée et une position sélectionnée parmi plusieurs positions de déviation,
dans lequel un bord avant du panneau de déflecteur (9) est monté de manière pivotante sur le bâti de support (23) ;
dans lequel le mécanisme de positionnement comprend :
un levier (57) ayant une première extrémité de levier et une seconde extrémité de levier (69), la première extrémité de levier étant agencée de manière pivotante sur le bâti de support (23) ;
une liaison (61) ayant une première extrémité de liaison (65) et une seconde extrémité de liaison (66), la première extrémité de liaison étant reliée de manière pivotante au panneau de déflecteur ;
un élément de charnière (67) raccordant de manière pivotante le levier (57) et la liaison entre eux ; et
un actionneur linéaire (75) ayant des première et seconde extrémités de raccordement pivotantes (77, 101) qui sont agencées pour modifier un angle défini entre le levier (57), la liaison et l'élément de charnière (67), et
**caractérisé en ce que** :
l'un parmi l'élément de charnière (67) et une fixation pivotante de la seconde extrémité de raccordement pivotante (77) de l'actionneur linéaire (75) est associé à un emplacement sur l'un parmi le levier (57) et la liaison (61) entre des première et seconde extrémités de levier (69) respectives ou les première et seconde extrémités de liaison (65, 66).

2. Ensemble de déflecteur d'air selon la revendication 1, dans lequel l'élément de charnière est associé à un emplacement sur l'un parmi le levier et la liaison entre des première et seconde extrémités de levier respectives ou les première et seconde extrémités de liaison respectives, et dans lequel la fixation pivotante de la seconde extrémité de raccordement pivotante de l'actionneur linéaire est au niveau de l'une parmi la seconde extrémité de levier et la seconde extrémité de liaison.

3. Ensemble de déflecteur d'air selon la revendication 1 ou 2, dans lequel l'élément de charnière est associé à un emplacement sur le levier entre la première extrémité de levier et la seconde extrémité de levier, et dans lequel la fixation pivotante de la seconde extrémité de raccordement pivotante de l'actionneur linéaire est au niveau de la seconde extrémité de levier.

4. Ensemble de déflecteur d'air selon la revendication 1, 2 ou 3, dans lequel la première extrémité de raccordement pivotante de l'actionneur linéaire est associée de manière opérationnelle avec la première extrémité de liaison.

5. Ensemble de déflecteur d'air selon l'une des revendications 1 à 4, dans lequel l'actionneur linéaire comprend une tige filetée de vis allongée, ayant un filetage de vis mâle le long d'au moins une partie de sa longueur, et un élément de translation ayant un filetage de vis femelle interne en mise en prise avec la tige filetée.

6. Ensemble de déflecteur d'air selon la revendication 5, dans lequel la tige filetée de vis a une extrémité retenue de manière axialement immobile dans un élément d'ancrage qui comprend l'une parmi les première et seconde extrémités de raccordement pivotantes, alors que l'élément de translation comprend l'autre parmi les première et seconde extrémités de raccordement pivotantes.

7. Ensemble de déflecteur d'air selon la revendication 6, dans lequel la tige filetée de vis est tourillonnée en rotation dans l'élément d'ancrage et l'élément de translation est immobile en rotation par rapport à la tige filetée de vis.

8. Ensemble de déflecteur d'air selon la revendication 6 ou 7, dans lequel l'élément d'ancrage comprend la seconde extrémité de raccordement pivotante et dans lequel une partie de la une extrémité de la tige filetée de vis retenue dans l'élément d'ancrage fait saillie à partir d'un côté opposé de l'élément d'ancrage et est mise en prise par entraînement par un joint universel.

9. Ensemble de déflecteur d'air selon la revendication 8, dans lequel une extrémité opposée du joint universel est mise en prise par entraînement, par une extrémité supérieure d'une tige d'entraînement pour être montée sur une paroi arrière d'une cabine de conducteur, et dans lequel une partie inférieure de la tige d'entraînement est prévue avec des moyens d'actionnement.

10. Ensemble de déflecteur d'air selon la revendication 9, dans lequel les moyens d'actionnement comprennent une manivelle manuelle pour l'actionnement manuel à distance de l'actionneur linéaire.

11. Ensemble de déflecteur d'air selon la revendication 9 ou 10, dans lequel la partie inférieure de la tige d'entraînement est calibrée pour indiquer des positions prédéfinies de réglage du panneau de déflecteur.

12. Ensemble de déflecteur d'air selon l'une des revendications 5 à 11, dans lequel l'élément de translation comprend un boîtier allongé sensiblement cylindrique pour recevoir de manière télescopique la tige filetée.

13. Ensemble de déflecteur d'air selon l'une quelconque des revendications 1 à 12, dans lequel le levier fait partie d'une paire de premier et second leviers parallèles communément montés sur une tige transversale et dans lequel la liaison fait partie d'une paire de première et seconde liaisons parallèles.

14. Ensemble de déflecteur d'air selon la revendication 13, dans lequel seul le premier levier d'une paire et la première liaison d'une paire sont associés avec l'actionneur linéaire.

15. Ensemble de déflecteur d'air selon l'une des revendications 1 à 14, dans lequel le bâti de support a des moyens de fixation adaptés pour coopérer avec des contre-fournitures sur un toit existant d'une cabine de conducteur pour son montage sur ce dernier.
